Europäisches Patentamt

European Patent Office

Office européen des brevets

(11) Veröffentlichungsnummer: **0 176 796**
**B1**

(12) EUROPÄISCHE PATENTSCHRIFT

(45) Veröffentlichungstag der Patentschrift:
19.11.87

(21) Anmeldenummer: 85111208.6

(22) Anmeldetag: 05.09.85

(51) Int. Cl.⁴: **B 62 D 55/14**

(54) Laufrolle für ein Gleiskettenfahrzeug.

(30) Priorität: 29.09.84 DE 3435872

(43) Veröffentlichungstag der Anmeldung:
09.04.86 Patentblatt 86/15

(45) Bekanntmachung des Hinweises auf die Patenterteilung:
19.11.87 Patentblatt 87/47

(84) Benannte Vertragsstaaten:
AT BE CH FR GB IT LI NL SE

(56) Entgegenhaltungen:
EP - A - 0 035 913
DE - A - 2 515 443

(73) Patentinhaber: Krauss-Maffei Aktiengesellschaft,
Krauss-Maffei-Strasse 2, D-8000 München 50 (DE)

(72) Erfinder: Seit, Horst, Steinbach 28, D-8086 Moorenweis
(DE)

# Beschreibung

Die Erfindung bezieht sich auf eine Laufrolle für ein Gleiskettenfahrzeug gemäss dem Oberbegriff des Anspruchs 1.

Laufrollen für Gleiskettenfahrzeuge müssen insbesondere dann, wenn sie aus Gründen der Gewichtsersparnis aus Aluminium gefertigt sind, dort, wo der Führungszahn der Kette zum Zwecke der Querkraftabstützung anliegt, armiert sein. Es ist bekannt, zu diesem Zweck die Führungsflanken der Kettenführungszähne mit Ringen aus verschleissfestem Material, insbesondere aus Stahl, zu armieren. Aus der DE-A-25 15 443 ist eine Laufrolle mit den Merkmalen des Oberbegriffs des Anspruchs 1 bekannt. Zur elastischen Befestigung der Verschleissschutzringe an den Führungsflanken sind diese Ringe mit den Führungsflanken über eine Gummischicht verbunden, wobei die Verschleissschutzringe im Querschnitt die Form eines L aufweisen, dessen Schenkel sich zu ihren Enden hin verjüngen. Durch die elastische Befestigung der Verschleissschutzringe an den Führungsflanken soll eine Lockerung der Ringe vermieden werden.

Durch die besondere Formgebung der Verschleissschutzringe soll bei Gewährleistung eines ausreichenden Schutzes die Felge des Gleiskettenlaufrades nur unwesentlich geschwächt und damit die Bruchgefahr der Felge wesentlich vermindert werden.

Infolge der nur geringfügigen Schwächung des Felgenquerschnitts steht für die verbindende Gummischicht aber nur ein verhältnismässig schmaler Zwischenraum zur Verfügung. Die Gummischicht muss daher entsprechend hart sein, um die durch den Führungszahn übertragenen Querkräfte aufnehmen zu können. Die hierdurch bedingte geringe Elastizität der Zwischenlage hat somit gegenüber der herkömmlichen Ausrüstung der Laufrollen mit Verschleissschutzringen immer noch eine beträchtliche unerwünschte Geräuschentwicklung zur Folge.

Hiervon ausgehend liegt der Erfindung die Aufgabe zugrunde, die Verschleissschutzringe in der Laufrollenfelge so zu lagern, dass die vom Kettenzahn übertragenen Querkräfte möglichst elastisch aufgenommen werden, um dadurch Schwingungen und Geräusch zu reduzieren.

Diese Aufgabe wird nach dem Kennzeichen des Anspruchs 1 gelöst.

Die elastische Aufnahme der Querkraftkomponente wird bei der erfindungsgemässen Laufrolle durch die trichterförmige Neigung der Auflageflächen für die Gummiarmierung günstig beeinflusst. Diese Wirkung wird noch dadurch verbessert dass gemäss Anspruch 2 die Auflagefläche treppenförmig abgestuft ist. Ferner führt das Einvulkanisieren mehrerer koaxial zur Laufrollenachse angeordneter Verschleissschutzringe ähnlich wie bei einem Gürtelreifen zur Verminderung der Walkarbeit und lässt daher die Verwendung weicherer Gummimischungen zu, wodurch die Schwingungs- und Geräuschereduzierung günstig beeinflusst wird.

Auch die Wärmeabfuhr wird durch die einvulkanisierten Verschleissschutzringe verbessert.

In vorteilhafter Ausbildung der Erfindung kann gemäss Anspruch 3 das Raumprofil für den Führungszahn so weit verkleinert werden, dass der Führungszahn unter leichter Vorspannung geführt wird. Hierdurch wird erreicht, dass der Führungszahn spielfrei an den Führungsflanken anliegt, was sich besonders günstig auf die Geräuschdämpfung auswirkt.

Die Erfindung ermöglicht ferner, dass das Aufvulkanisieren der Gummiarmierung auf der Laufrollenfelge und das Einvulkanisieren der Verschleissschutzringe in einem Arbeitsgang erfolgen kann.

Ausführungsbeispiele der Erfindung sind in der Zeichnung dargestellt. Es zeigen

Fig. 1 einen Teilquerschnitt einer Laufrolle mit einvulkanisierten Verschleissschutzringen und treppenförmig abgesetzter Auflagefläche für die Gummiarmierung und

Fig. 2 einen Teilquerschnitt einer Laufrolle mit einvulkanisierten Verschleissschutzringen und trichterförmig nach innen geneigter Auflagefläche für die Gummiarmierung.

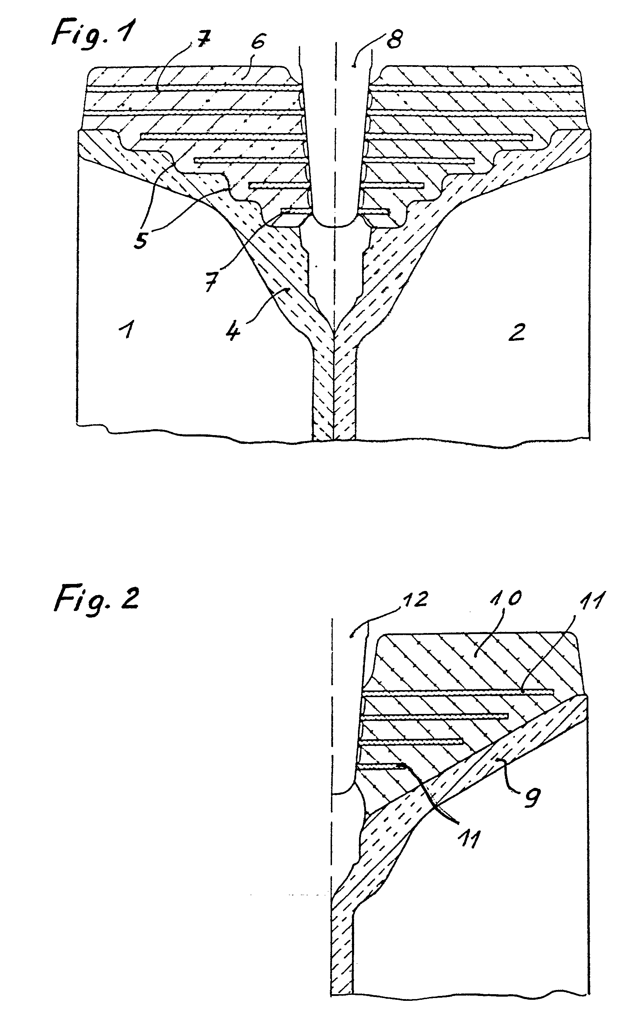

In Fig. 1 ist eine Laufrolle für ein Gleiskettenfahrzeug dargestellt, die aus zwei symmetrischen Hälften 1 und 2 besteht, die fest miteinander verbunden sind. Je eine Hälfte der Laufrolle besteht aus einer Felge 4 mit treppenförmigen Absätzen 5 und einer auf die Felge 4 aufvulkanisierten Gummiarmierung 6, in welche Verschleissschutzringe 7 unterschiedlicher Breite und unterschiedlichen Durchmessers einvulkanisiert sind. Die Verschleissschutzringe 7 ragen mit je einer ihrer Schmalseiten aus der Innenseite der Gummiarmierung 6 hervor und bilden damit die Führungsflanke für einen Kettenführungszahn 8.

Fig. 2 zeigt eine weitere Ausführungsform der Erfindung. Die nur mit ihrer rechten Hälfte dargestellte Laufrolle umfasst eine Felge 9, deren Auflagefläche trichterförmig nach innen geneigt ist und auf die eine Gummiarmierung 10 mit einvulkanisierten Verschleissschutzringen 11 aufvulkanisiert ist. Die auf der Innenseite der Gummiarmierung 10 herausragenden Schmalseiten der Verschleissschutzringe 11 bilden die Führungsflanken für einen Kettenführungszahn 12.

## Patentansprüche

1. Laufrolle für ein Gleiskettenfahrzeug mit einem metallischen Grundkörper, insbesondere aus Aluminium, und einer stirnseitigen Gummiarmierung, wobei die Laufrolle zur Führung von Kettenführungszähnen (8, 12) vorgesehen ist und die den Kettenführungszähnen (8, 12) zugewandten Führungsflanken durch paarweise gegenüberliegende, elastisch gelagerte Verschleissschutzringe (7, 11) aus verschleissfestem Werkstoff, insbesondere Stahl, gebildet werden, und wobei wenigstens ein Paar von Verschleissschutzringen (7, 11) in die Gummiarmierung (6, 10) der Laufrolle mit den Breitseiten fest eingebettet ist, derart, dass aus der Gummiarmierung (6, 10) herausragende, dem jeweilig im Eingriff stehenden Kettenführungszahn (8, 12) zugewandten Seiten der Verschleissschutzringe (7, 11) die Führungsflanken für die Kettenführungszähne (8, 12) bilden, dadurch gekennzeichnet, dass die Auflageflächen der Laufrolle für die Gummiarmierung (6, 10) trichterförmig nach innen geneigt sind und dass die Verschleissschutzringe (7, 11) in ihrer axialen Erstreckung den Auflageflächen derart angepasst sind, dass mehrere Paare von Verschleissschutzringen (7, 11) mit rechteckigem Querschnitt, unterschiedlicher Breite und unterschiedlichen Durchmessern koaxial zur Laufrollenachse in der Gummiarmierung (6, 10) einvulkanisiert sind.

2. Laufrolle nach Anspruch 1, dadurch gekennzeichnet, dass die Auflageflächen der Laufrolle entsprechend der unterschiedlichen axialen Erstreckung der Verschleisssschutzringe (7) mit treppenförmigen Absätzen (5) versehen sind.

3. Laufrolle nach Anspruch 1 oder 2, dadurch gekennzeichnet, dass die paarweise einander gegenüberliegenden Verschleissschutzringe (7, 11, 15) so in die Gummiarmierung (6, 10, 14) der Laufrolle einvulkanisiert sind, dass der Kettenführungszahn (8, 12) unter leichter Vorspannung geführt ist.

## Claims

1. A roller for a track laying vehicle, comprising a metallic fundamental substance, particularly of aluminium, and a front-side rubber sheath, the roller being designated for guiding of chain guide teeth (8, 12), and the guide sides turned towards the chain-guide teeth (8, 12) being formed by opposite pairs of elastically supported guard rings against wear (7, 11) made of wear-resistant material, particularly steel, while at least one pair of guard rings against wear (7, 11) are firmly embedded with their broad sides within the rubber sheath (6, 10) of the roller, in such a way that the sides of the guard rings against wear (7, 11) protruding from the rubber sheath (6, 10) towards that chain-guide tooth (8, 12) at a time in gear, form the guide sides for the chain-guide teeth (8, 12), characterized in that the beddings of the roller for the rubber sheath (6, 10) are funnel-shaped inwardly inclined and that the guard rings against wear (7, 11), in their axial extension, are fitted to the beddings such as to have several pairs of guard rings against wear (7, 11) of rectangular cross-section, of different width and diameters, vulcanized coaxially to the roller axis into the rubber sheath (6, 10).

2. A roller in accordance with claim 1, characterized in that the beddings of the roller are provided with stepped recesses (5) in correspondence with the different axial extension of the guard rings against wear (7).

3. A roller in accordance with claims 1 or 2, characterized in that the opposite pairs of guard rings against wear (7, 11, 15) are vulcanized into the rubber sheath (6, 10, 14) of the roller such as to guide the chain-guide tooth (8, 12) under light biasing potential.

## Revendications

1. Galet pour véhicule à chenilles, comportant un corps métallique, notamment en aluminium et, du côté frontal, une garniture en caoutchouc, ce galet étant destiné à guider les dents (8, 12) de guidage de la chenille, et les flancs de guidage tournés vers ces dents (8, 12) étant formés par des couronnes (7, 11) de protection contre l'usure, en une matière résistant à l'usure, notamment l'acier, qui sont opposées deux à deux et montées élastiquement, une paire au moins de ces couronnes (7, 11) étant rendue solidaire de la garniture (6, 10) en caoutchouc du galet par leurs grands côtés, de façon que les côtés desdites couronnes (7, 11), qui sont tournés vers la dent de guidage (8, 12) en prise et qui font saillie de cette garniture (6, 10), forment les flancs de guidage des dents (8, 12), galet caractérisé en ce que les surfaces de ce galet, qui servent d'appui à la garniture (6, 10) en caoutchouc, sont inclinées en entonnoir vers l'intérieur et en ce que la largeur axiale des couronnes (7, 11) de protection contre l'usure est adaptée à celle de ces surfaces d'appui de façon que plusieurs paires de ces couronnes (7, 11) à section rectangulaire, de largeurs différentes et de diamètres différents, soient rendues solidaires, par vulcanisation, coaxialement à l'axe du galet, dans la garniture (6, 10) en caoutchouc.

2. Galet selon revendication 1, caractérisé en ce que les surfaces d'appui du galet présentent des décrochements (5) en escalier correspondant aux largeurs axiales différentes des couronnes (7) de protection contre l'usure.

3. Galet selon la revendication 1 ou 2, caractérisé en ce que les couronnes (7, 11) de protection contre l'usure, opposées par paires, sont solidarisées par vulcanisation dans la garniture (6, 10) en caoutchouc du galet, de façon que la dent (8, 12) de guidage de la chenille soit guidée sous une légère précontrainte.

*Fig. 1*

*Fig. 2*